Europäisches Patentamt

European Patent Office

Office européen des brevets

(11) Veröffentlichungsnummer: **0 398 863**

**A1**

(12) **EUROPÄISCHE PATENTANMELDUNG**

(21) Anmeldenummer: **90890137.4**

(22) Anmeldetag: **08.05.90**

(51) Int. Cl.⁵: **C23G 1/36**

(30) Priorität: **17.05.89 AT 1167/89**

(43) Veröffentlichungstag der Anmeldung:
**22.11.90 Patentblatt 90/47**

(84) Benannte Vertragsstaaten:
**AT BE CH DE DK ES FR GB GR IT LI LU NL SE**

(71) Anmelder: **BÖHLER Gesellschaft m.b.H.**
**Nordwestbahnstrasse 12-14**
**A-1201 Wien(AT)**

(72) Erfinder: **Lösch, Hans, Dipl.-Ing.**
**Peter Tunnerg. 15**
**A-8605 Kapfenberg(AT)**
Erfinder: **Reisenhofer, Klaus**
**Johann Böhmstrasse 59**
**A-8605 Kapfenberg(AT)**

(54) **Verfahren zur Rückgewinnung von Metallen bzw. Metalloxiden und Säuren aus Salzlösungen, insbesondere aus Beizsäuren oder Beizsäuregemischen.**

(57) Es soll ein Verfahren zur Rückgewinnung von Metallen bzw. Metalloxiden und Säuren aus säurehaltigen Salzlösungen, insbesondere Beiz-Säuregemischen, angegeben werden. Hierzu ist vorgesehen, daß die Lösung mit Säure(n) und Metallsalzen in einem ersten Schritt in einen wiedereinsetzbaren Teil mit hohem Verhältniswert von freiem Säuregehalt und Metallgehalt der Lösung und ein Salzkonzentrat getrennt wird. In einem zweiten Schritt wird aus dem Salzkonzentrat die gegebenenfalls noch vorliegende freie Säure rückgewonnen , das Metallsalz zerlegt, dessen Säurerest bzw. die gebundene Säure in Säure umgewandelt und der Metallteil oxidiert, welche Metalloxide z.B. in schmelzmetallurgischen Prozessen verwendbar sind.

EP 0 398 863 A1

## Verfahren zur Rückgewinnung von Metallen bzw. Metalloxiden und Säuren aus Salzlösungen, insbesondere aus Beiz-Säuren oder Beiz-Säuregemischen

Die Erfindung betrifft ein Verfahren zur Rückgewinnung von Metallen bzw. Metalloxiden und Säuren nach dem Oberbegriff des Anspruches 1.

Das vorgegebene Verfahren soll einerseits eine kostengünstige Regenerierung von Säurebädern, insbesondere Beiz-Bädern, die in der Metallbearbeitung bzw. Metallverarbeitung eingesetzt werden, ermöglichen und deren Beizwirkung möglichst hoch halten, andererseits Abfallstoffe wie beispielsweise Schlamm aus neutralisierter Abbeize und dergleichen Umweltbelastungen vermeiden und Wertstoffe rückgewinnen.

Bei der Verarbeitung von Metallen und Legierungen ist es oftmals erforderlich, zum Entfernen von Oxiden oder Nitriden, Zunder und dergleichen das Zwischenprodukt oder Endprodukt einer Beizbehandlung zu unterwerfen. Dabei wird ein Metallteil in eine säure oder in ein Säuregemisch eingebracht und nach entsprechender Behandlungszeit diesem oberflächengereinigt bzw.entzundert wieder entnommen. Bei oftmaligem intensivem Gebrauch des Beizbades wird dessen Wasserstoffionenkonzentration bei ansteigendem Metallsalzgehalt niedriger bzw. dessen Wirkung herabgesetzt, wodurch die erforderlichen Beizzeiten zur Behandlung der Metalloberflächen verlängert werden, und letztlich aus technologischen bzw. wirtschaftlichen Gründen das Beizbad als erschöpft anzusehen ist.

Erschöpfte Beizbäder, sog. Abbeizen, müssen aus Umweltgründen neutralisiert werden, wobei jedoch der bei der Neutralisation anfallende Rückstand zu deponieren ist und seinerseits eine Umweltbelastung darstellt. Eine Neutralisation erfolgt zumeist mit Kalkhydrat, wobei die freien Säuren,z.B. Flußsäure, zu Calciumverbindungen, beispielsweise $CaF_2$ und Wasser, und die Metallsalze zu Metalloxiden , z,B. $Fe_2O_3$, und Calciumverbindungen, z.B. $Ca(NO_3)_2$ und Wasser reagieren und Rückstände bilden.

Es wurde bereits vorgeschlagen, die sogenannte Abbeize in einen säurereichen Teil, der dem Beizbad wieder zuführbar ist, und in einen hohe Metallsalzkonzentration aufweisenden Teil, einem sog. Salzkonzentrat, zu trennen und erst diesen bzw. erst dieses zu neutralisieren. Dabei ist zwar eine bessere Ausnutzung der Säuren möglich, ein umweltbelastender Abfall, dem auch die Metallanteile angehören, kann jedoch nicht verhindert werden.

Auch elektrolytisch wirkende oder Röst- Verfahren zur Aufarbeitung von Abbeizen, gegebenenfalls mit Verdampfen des freien Säureanteils und Wassers und anschließendem bzw. gleichzeitigem Erhitzen auf Temperaturen von ca. 300 °C sind bekannt geworden, wobei die freie und gebundene Saure und der Metallanteil rückgewonnen werden können. Derartige Verfahren sind für Abbeizen mit hohen Energiekosten und gegebenenfalls hohen Abgasreinigungskosten, u. a. auf Grund der großen Volumina der Abbeizen, verbunden.

Der Erfindung lag die Aufgabe zugrunde,ein Verfahren der eingangs genannten Art zu schaffen, welches einerseits eine kostengünstige Regenerierung und damit Verlängerung der Beizwirkung von Beiz-Säure-Bädern ermöglicht, andererseits den Anfall von umweltbelastenden Abfallstoffen vermeidet und die Wertstoffe z.B. Säuren sowie Metalle, wieder verwendbar aufbereitet. Die Aufgabe wird bei einer gattungsgemäßen Einrichtung durch die kennzeichnenden Merkmale des Anspruches 1 gelöst. Vorteilhafte Ausgestaltungen und Weiterbildungen sind in den Unteransprüchen gekennzeichnet.

Das erfindungsgemäße Verfahren zeichnet sich auch dadurch aus, daß die restlichen freien Säuren, insbesondere die in den Metallsalzen gebundenen Säuren, und die Metalle mit hohem Wirkungsgrad wieder verwendbar gemacht werden und geringste Abfallmengen bzw. Umweltbelastungen auftreten.

Anhand von Beispielen soll die Erfindung naher erläutert werden.

Beispiel 1:

Ein Beiz-Säurebad für Cr-Ni-Stahl wurde aus einem Gemisch von Salpetersäure mit einer Konzentration von 15 Gew.-% und Flußsäure mit einer Konzentration von 4 Gew.-% , Rest Wasser erstellt. Infolge des laufenden Durchsatzes von Beizgut erniedrigte sich die Beizgeschwindigkeit bzw. Beizwirkung je Zeiteinheit des Bades, sodaß dieses letztlich als Abbeize verworfen werden mußte. In der Abbeize wurden folgende Gehalte in g/l ermittelt:
Salpetersäure 142
Flußsäure 33
Eisen 47
Nickel 10
Chrom 5

Das Verhältnis freier Säuregehalt zu Metallgehalt betrug dabei ca. 2,8. Anstatt obige Abbeize mit Kalkhydrat zu neutralisieren, wurde diese einem Ionen-Austausch-Verfahren unterworfen, wobei der regenerierte Teil mit hoher Säurekonzentration folgende Werte in g/l aufwies:
Salpetersäure 131
Flußsäure 25,6

Eisen 14,2
Nickel 2,3
Chrom 1,8

Das Verhältnis freier Säure zu Metallgehalt dieses Teiles , welcher in das Beizbad rückgeleitet wurde, betrug über 8,5, das Salzkonzentrat als Restteil wies ein Konzentrationsverhältnis Säure/Metall von 0,4 auf.

Entgegen dem Vorurteil der Fachwelt ließ sich das Salzkonzentrat sowohl im sogenannten Sprüh-Röst-Verfahren als auch in einem Elektrolytverfahren vorteilhaft zu einem Salpeter-Flußsäure-Gemisch und zu Eisenoxid, Nickeloxid sowie Chromoxid verarbeiten, wobei die Flußsäure zu ca. 96 % und die Salptersäure zu ca. 84 % rückgewonnen wurden.
Die Metalloxide wurden durch Sintern kompaktiert und in einem Vakuum-Lichtbogenofen mit nicht verzehrbarer Elektrode einer Eisen-Nickel-Chrom - Umschmelze zugeführt.

Beispiel 2:

Schnellstahl wurde im Durchlaufverfahren in einem Beizbad von ca. 8 Vol.-% Salpetersäure und ca. 16 Vol.-% Schwefelsäure , Rest Wasser, gebeizt. Bei niedrigem Metallgehalt des Säuregemisches bzw. neu bereitetem Beizbad war die beizwirkung gering, erhöhte sich jedoch mit steigender Metallkonzentration. Bei einem Metallgehalt des Beizbades von 18 g/l wurde kontinuierlich das Metallsalz-Säure-Gemisch dem Beizbad entnommen,· in einem Retardations-Verfahren auf einen Metallgehalt von 12 g/l gebracht und bei Zusatz von Frischsäuren dem Beizbad wieder zugeführt bzw. rückgeleitet. Eine Entnahme bzw. Rückführung von 1520 1/Stunde bewirkte im Beizbetrieb einen weitgehend konstanten Metallgehalt von 17,5 g/l im Säuregemisch bei hoher Beizwirkung. Das Salzkonzentrat wurde in einem Verdampfungs-Röstverfahren in Metalloxid für Sinterprodukte und in Säure umgewandelt, welche als Frischsäurezusatz zum Beizbad Verwendung fand.

**Ansprüche**

1. Verfahren zur Rückgewinnung von Metallen bzw. Metalloxiden und Säuren aus säurehaltigen Salzlösungen, insbesondere aus Metallsalze enthaltenden Beiz-Säuren oder Beiz-Säuregemischen, welche vorzugsweise bei der Metallverarbeitung und Metallbearbeitung eingesetzt werden, dadurch gekennzeichnet, daß eine Lösung mit Säure(n) und Metallsalzen , z.B. eine gebrauchte Beizflüssigkeit mit gegenüber den Ausgangsgehalten niedriger Wasserstoff-Ionenkonzentration und hoher Metallsalzkonzentration in einem ersten Schritt nach an sich bekannten Ionenaustausch-, Adsorptions-, Retardations-, Umkehrosmose-oder dergleichen Verfahren in einen Teil mit einem hohen Verhältniswert von freiem Säuregehalt zu Metallgehalt der Lösung, welcher Teil in das Beizbad rückleitbar ist, und ein Salzkonzentrat mit hohem Metallsalzanteil, bzw. niedrigem Wert von freiem Säuregehalt zu Metallgehalt der Lösung, der weiters erhöht werden kann, getrennt wird,aus welchem Salzkonzentrat in einem zweiten Schritt bei Anwendung an sich bekannter elektrolytischer oder Verdampfungs- und Röst-Verfahren die gegebenenfalls vorliegende(n) restliche(n) freie(n) Säure(n) rückgewonnen und das Metallsalz bzw. die Metallsalze zerlegt und gegebenenfalls bei Zugabe von Wasser der Säurerest in Säure(n) , welche z.B. in das Beizbad rückführbar ist (sind), umgewandelt werden und der Metallteil des Salzes ( der Salze) in Oxide übergeführt wird, welche Metalloxide vorzugsweise nach einer Reinigung und/oder Kompaktierung , beispielsweise durch Pelletieren, als Rohstoff z.B. bei schmelzmetallurgischen Prozessen verwendet werden können.

2. Verfahren nach Anspruch 1, dadurch gekennzeichnet, daß im ersten Schritt eine Erniedrigung des Verhältniswertes von freiem Säureanteil zu Metallanteil bzw. eine Verminderung des Anteiles an freier Säure ( freien Säuren) des Salzkonzentrates durch mehrmaliges Anwenden eines Ionenaustausch,- Adsorptions,-Retardations,- Umkehrosmose- oder dergleichen Verfahrens durchgeführt wird, worauf in einem zweiten Schritt, insbesondere die gebundene(n) Säure(n) rückgewonnen und der Metallteil des (der) Salzes ( Salze) oxidiert werden.

3. Verfahren nach Anspruch 2 oder 3, dadurch gekennzeichnet, daß einem Beizbad Metallsalze enthaltende Beizsäure oder Beizsäuregemisch kontinuierlich oder diskontinuierlich in Teilmengen entnommen und in einem ersten Schritt in einen Teil mit hohem Verhältniswert von freiem Säuregehalt zu Metallgehalt der Lösung und ein Salzkonzentrat getrennt wird, welcher Teil mit hohem Verhältniswert gegebenenfalls bei Zusatz von Frischsäure(n) in das Beizbad rückgeleitet und der Metallgehalt des Beizbades in einem Bereich von 3 bis 50, vorzugsweise 10 bis 30 , insbesondere 15 bis 25, g Metall je Liter Beizbad eingestellt bzw. konstant gehalten und das Salzkonzentrat in einem zweiten Schritt weiterverarbeitet wird.

4. Verfahren nach Anspruch 3, dadurch gekennzeichnet, daß durch eine Mengenregelung der Beizsäureentnahme und der Rückführung der im ersten Schritt auf einen hohen Wert von freiem Säuregehalt zu Metallgehalt gebrachten Lösung der gewünschte Metallgehalt im Beizbad eingestellt wird.

5. Verfahren nach Anspruch 1 bis 4, dadurch gekennzeichnet, daß eine Säure-Metallsalze-Lösung mit einem Verhältnis von freiem Säuregehalt in g/l zu Metallgehalt in g/l von höchstens 8,5, vorzugsweise höchstens 6,0, insbesondere höchstens 4,5 , in einem ersten Schritt in einen Teil mit hohem Säureanteil und ein Salzkonzentrat mit einem Verhältnis von freiem Säuregehalt zu Metallgehalt von höchstens 2,0, vorzugsweise höchstens 1,5, insbesondere höchstens 0,4, getrennt und dieses Salzkonzentrat in einem zweiten Schritt einem elektrolytischen oder einem Verdampfungs-und Röst-bzw. Oxidations-Verfahren mit Rückgewinnung der Säure(n) und Metalloxide zugeführt wird.

6. Verfahren nach Anspruch 1 bis 5, dadurch gekennzeichnet, daß die Säure-Metallsalz-Lösung Salpetersäure und/oder Salzsäure und/oder Flußsäure und deren Salze mit Metallen aus den Gruppen VII a und/oder VIII a des Periodensystems enthält.

7. Verfahren nach Anspruch 1 bis 6, dadurch gekennzeichnet, daß mindestens 80%, vorzugsweise mindestens 90%, insbesondere mindestens 95%, der eingesetzten Flußsäure und/oder mindestens 70%, vorzugsweise mindestens 76 %, insbesondere mindestens 82 %, der eingesetzten Salpetersäure und mindestens 90 % , vorzugsweise mindestens 94 %, insbesondere mindestens 98 %, der Metalle rückgewinnbar sind bzw. rückgewonnen werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 161 050 (KAWASAKI STEEL CORP.) <br> * Anspruch 1; Beispiel 1 * <br> --- | 1,2,6,7 | C 23 G 1/36 |
| A | EP-A-0 058 148 (ANDRITZ RUTHNER INDUSTRIEANLAGEN) <br> * Ansprüche 1-3; Beispiele * <br> --- | 1,6 | |
| A | METALL OBERFLÄCHE, Band 41, Nr. 7, Juli 1987, Seiten 715-322, München, DE; W. GÖTZELMANN et al.: "Stofftrennung und Stoffrückgewinnung mit dem Retardation-Verfahren, Teil 2" <br> --- | | |
| A | CHEMICAL ABSTRACTS, Band 78, Nr. 16, 23. April 1973, Seite 135, Seite 135, Zusammenfassung Nr. 99775b, Columbus, Ohio, US; A.H. HEIT et al.: "Electrodialytic recovery of sulfuric acid and iron content from spent pickling liquor", & MEMBRANE PROCESSES IND. BIOMED., PROC. SYMP. 1970 (Pub. 1971), 145-62 <br> ----- | | |

| | | | RECHERCHIERTE SACHGEBIETE (Int. Cl.5) |
|---|---|---|---|
| | | | C 23 G <br> C 23 F |

Der vorliegende Recherchenbericht wurde für alle Patentansprüche erstellt

| Recherchenort | Abschlußdatum der Recherche | Prüfer |
|---|---|---|
| DEN HAAG | 31-07-1990 | DE ANNA P.L. |

EPO FORM 1503 03.82 (P0403)